# EUROPÄISCHE PATENTSCHRIFT

(11) **EP 1 030 122 B1**
(45) Veröffentlichungstag und Bekanntmachung des Hinweises auf die Patenterteilung: **14.12.2005**
(21) Anmeldenummer: 00890042.5
(22) Anmeldetag: 16.02.2000
(51) Int. Cl.: F24D 3/14, F24H 9/12, F16L 59/14

(54) **Wärmetauscher und Verschlussstück**
Heat exchanger and fitting
Echangeur de chaleur et pièce de fermeture

(30) Priorität: 16.02.1999 AT 24699
(43) Veröffentlichungstag der Anmeldung: 23.08.2000
(73) Patentinhaber: Schludermann, Arnold, 9500 Villach (AT); Hafner, Gernot, 9462 Bad St. Leonhard (AT); Geist, Friedrich, 3741 Pulkau (AT)
(72) Erfinder: Schludermann, Arnold, 9500 Villach (AT); Hafner, Gernot, 9462 Bad St. Leonhard (AT); Geist, Friedrich, 3741 Pulkau (AT)
(74) Vertreter: Wildhack, Helmut

(56) Entgegenhaltungen:
- EP-A- 0 797 053
- DE-A- 3 605 538
- DE-A- 4 426 640
- DE-A- 4 434 387
- DE-A- 19 818 151
- FR-A- 2 250 079
- US-A- 4 531 575

## Beschreibung

Die Erfindung betrifft einen von einem Wärmeträgermedium durchströmten Wärmetauscher gemäß dem Oberbegriff des Patentanspruches 1.

Bei z.B. aus der DE 44 34 387 bekannten Wärmetauschern sind das Vorlauf-Sammelrohr und das Rücklauf-Sammelrohr im wesentlichen parallel zueinander und in Abstand voneinander angeordnet. Das Wärmeträgermedium wird über das Vorlauf-Sammelrohr zugeführt, durchströmt dann das zwischen den beiden Sammelrohren befindliche Rohrregister, über welche es seine Wärme abgibt, und wird schließlich über das Rücklauf-Sammelrohr abgeführt. Die Zu- bzw. Abfuhr des Wärmeträgermediums und auch die Verbindung der Sammelrohre benachbarter Wärmetauscher erfolgt hiebei über Verbindungsleitungen, insbesondere flexible Verbindungsrohre. Die Montage von Gruppen derartiger Wärmetauscher ist, insbesondere bei Wandheizungen, umständlich und zeitaufwendig, da das höher gelegene Rücklauf-Sammelrohr des einen Heizkörpers mit dem tiefer gelegenen Vorlauf-Sammelrohr des benachbarten Heizkörpers über Leitungen, beispielsweise Rohre, Schläuche od.dgl., am Ort der Montage durch Verschweißen verbunden werden muss.

Aus der DE 198 18 151 A1 ist ein Dämm- und Montagesystem für Fittinge im Sanitär- und Heizungsrohrleituhgsbau bekannt, bei dem das Dämmstück mit Hilfe einer Montageschablone nach seiner Montage gleichzeitig befestigt und ausgerichtet werden kann und das die Montageschablone durch ihre Kröpfung und ihre Freimachung sowohl für eine Bodenbefestigung für eine L- und T-Form-Gamitur geeignet ist, als auch 180° gedreht für eine Wandbefestigung genutzt werden kann und das hierfür die vorgesehene Befestigungspunkte jeweils genutzt werden können.

Die vorliegende Erfindung hat sich zur Aufgabe gestellt, diesen Nachteil zu vermeiden und einen Wärmetauscher so zu gestalten, dass ein Anschluss eines benachbarten Wärmetauschers auf einfache Weise ohne wesentlichen Zeitaufwand möglich ist. Zur Lösung dieser Aufgabe ist ein Wärmetauscher der eingangs genannten Art durch die im kennzeichnenden Teil des Anspruches 1 angeführten Merkmale charakterisiert. Bei der erfindungsgemäßen Konstruktion ist es also lediglich notwendig, benachbarte Wärmetauscher so anzuordnen, dass die eine Öffnung des Verschlussstückes, über welche das Wärmetauschermedium austritt, dem offenen Ende des Sammelrohres eines benachbarten Wärmetauschers gegenüberliegend anzuordnen und auf geeignete Weise, beispielsweise durch Verschweißung, miteinander zu verbinden, so dass die aufwendige Montage von Verbindungsrohren zwischen benachbarten Wärmetauschern entfällt. Dadurch, dass der Durchtrittskanal im Verschlussstück eines Sammelrohres angeordnet ist, erfolgt nicht nur der erforderliche Abschluss dieses Sammelrohres, sondern auch automatisch die gewünschte Lagefixierung des Durchtrittskanals.

Der den Pfropfen aufweisende Abschnitt weist jene Öffnung auf, die an das Sammelrohr eines benachbarten Wärmetauschers anschließbar ist, so dass bei dieser Konstruktion benachbarte Wärmetauscher in der erwünschten Weise so ausgerichtet sind, dass die Achsen ihrer Sammelrohre miteinander fluchten.

Vorzugsweise sind die Öffnungen des Durchtrittskanales als Muffen ausgebildet, in welche ein Rohrstück einsetzbar ist. Das in eine Öffnung eingesetzte Rohrstück ist das Verbindungsrohr zum jeweils anderen Sammelrohr, das in die andere Öffnung eingesetzte Rohrstück ist das Sammelrohr des benachbarten Heizkörpers. Vorzugsweise ist hiebei der Querschnitt des Durchtrittskanales gleich dem Querschnitt des Rohrstückes und damit auch jenem der Sammelrohre, so dass eine gleichmäßige Strömung des Wärmeträgermediums gewährleistet ist.

Der Pfropfen ist zweckmäßig mit einem Endstück versehen, dessen Außendurchmesser dem Innendurchmesser der Sammelrohre entspricht, so dass durch Einsetzen des Endstückes in das Sammelrohr dieses auf einfache Weise abgeschlossen und damit auch das Verschlussstück mit dem Durchtrittskanal in seiner Lage fixiert ist.

Gemäß einer bevorzugten Ausführungsform bestehen das Verschlussstück und das Rohrstück aus Kunststoff, insbesondere aus Polypropylen, und sind miteinander durch Wärmezufuhr verschweißt. Dabei ergibt sich eine besonders einfache Montage, da es lediglich erforderlich ist, die einzelnen Teile zusammenzustecken und mittels einer geeigneten Vorrichtung zu erhitzen, so dass der Kunststoff teigig wird und eine dichte Verbindung hergestellt ist.

Zweckmäßig ist es, im Durchtrittskanal ein Absperrorgan an sich bekannter Bauart vorzusehen, durch welches der Durchfluss des Wärmeträgermediums gedrosselt oder überhaupt unterbrochen werden kann.

Konstruktive und anwendungsmäßige Vorteile ergeben sich mit den Merkmalen der Ansprüche 8 oder 9.

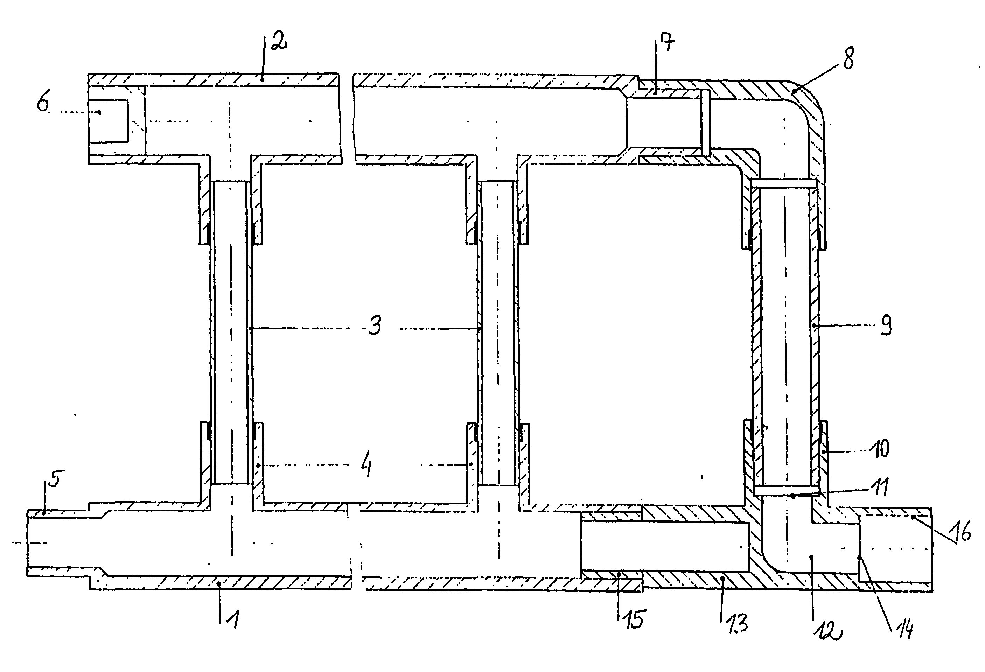

In der Zeichnung ist die Erfindung anhand eines Ausführungsbeispieles schematisch dargestellt. Die einzige Figur zeigt im Schnitt einen erfindungsgemäßen Wärmetauscher.

Der erfindungsgemäße Wärmetauscher weist ein Zulauf-Sammelrohr 1, ein Rücklauf-Sammelrohr 2 und ein zwischen diesen beiden Sammelrohren 1,2 angeordnetes, aus Leistungsrohren 3 bestehendes Rohrregister auf. Die Sammelrohre sind hiebei mit Muffen 4 versehen, in welche die Leistungsrohre 3 eingesetzt sind. Durch Wahl der Länge der Sammelrohre 1,2 und der Leistungsrohre 3 kann die Größe des Wärmetauschers variiert und den jeweiligen Erfordernissen angepasst werden. Dem bei Verwendung des Wärmetauschers für eine Wandheizung unten befindlichen Vorlauf-Sammelrohr 1 wird durch eine nicht dargestellte, mit einem Stutzen 5 verbindbare Anschlussleitung ein Wärmeträgermedium zugeführt, welches über die Leistungsrohre 3 nach oben strömt und dabei seine Wärme teilweise abgibt, bevor es in das Rücklauf-Sammelrohr 2 gelangt, das an seinem einen Ende durch einen Pfropfen 6 abgeschlossen ist. Das andere Ende weist einen dem Stutzen 5 entsprechenden Stutzen 7 auf, der über ein Knie 8 mit einem Rohrstück 9 verbunden ist, welches über eine Muffe 10 an die eine Öffnung 11 eines Durchtrittskanals 12 angeschlossen ist, der sich in einem Verschlussstück 13 für das dem Stutzen 5 gegenüberliegende Ende des Vorlauf-Sammelrohres 1 befindet. Der Durchtrittskanal 12 ist von zwei zueinander einen rechten Winkel einschließenden Abschnitten gebildet, wobei die Achse des die andere Öffnung 14 aufweisenden Abschnittes mit der Achse des Vorlauf-Sammelrohres 1 fluchtet. Um das Vorlauf-Sammelrohr 1 an dem dem Stutzen 5 gegenüberliegenden Ende zu verschließen, weist das Verschlussstück 13 einen in dieses Ende einsetzbaren Pfropfen 15 auf.

Die Öffnung 14 ist von einer Muffe 16 gebildet, die so ausgebildet ist, dass bei der Montage benachbarter Wärmetauscher der Stutzen 5 des einen Wärmetauschers in die Muffe 15 des anderen Wärmetauschers eingesetzt werden kann. Die Wärmetauscher sind hiebei zueinander ausgerichtet, sodass sie die gewünschte Lage einnehmen, und es entfallen bei der Montage die Verbindungsrohre, über welche das Rücklauf-Sammelrohr eines Wärmetauschers mit dem Vorlauf-Sammelrohr des benachbarten Wärmetauschers bisher verbunden werden mussten.

Sämtliche Teile des erfindungsgemäßen Wärmetauschers bestehen aus Kunststoff, vorzugsweise Polypropylen, sodass ein thermisches Verschweißen der einzelnen zusammengesteckten Teile mittels Wärmezufuhr vorgenommen werden kann. Der dabei teigig werdende Kunststoff gewährleistet eine dichte Verbindung zwischen den einzelnen Teilen.

Die Innendurchmesser der Sammelrohre 1, 2, des Knies 8, des Rohrstückes 9 und des Durchtrittskanals 12 sind hiebei im wesentlichen gleich, sodass eine ungehinderte Strömung des Wärmeträgermediums gewährleistet ist.

Im Durchtrittskanal 12 kann ein Absperrorgan vorgesehen sein, durch welches der Durchtritt des Wärmeträgermediums gedrosselt bzw. unterbunden werden kann.

## Patentansprüche

1. Von einem Wärmeträgermedium durchströmter Wärmetauscher, insbesondere zum Heizen und/oder Kühlen von Räumen, mit einem Vorlauf-Sammelrohr (1), einem Rücklauf-Sammelrohr (2) und einem an diese Sammelrohre angeschlossenen Rohrregister (3), wobei zumindest eines der Sammelrohre (1) an wenigstens einem Ende durch ein Verschlussstück (13) abgeschlossen ist, wobei das Verschlussstück (13) dieses abgeschlossenen Sammelrohres (1) mit einem Durchtrittskanal (12) versehen ist, dessen eine Öffnung (11) mit dem anderen Sammelrohr (2) verbunden ist, und an dessen andere Öffnung (14) das Sammelrohr (1) eines benachbarten Wärmetauschers anschließbar ist und wobei der Durchtrittskanal (12) aus zwei miteinander einen, vorzugsweise rechten, Winkel einschließenden Abschnitten besteht, **dadurch gekennzeichnet, dass** am Verschlussstück (13) ein mit dem Abschnitt des Durchtrittskanals (12), der die Öffnung (14) zum Anschluss eines benachbarten Wärmetauschers aufweist, achsparalleler Pfropfen (15) vorgesehen ist, der das Ende des abzuschließenden Sammelrohres (1) abdichtend verschließt.

2. Wärmetauscher nach Anspruch 1, **dadurch gekennzeichnet, dass** die Öffnungen (11,14) des Durchtrittskanals (12) als Muffen (10,16) ausgebildet sind, in welche ein Rohrstück (9) einsetzbar ist.

3. Wärmetauscher nach Anspruch 2, **dadurch gekennzeichnet, dass** der Innenquerschnitt des Durchtrittskanals (12) gleich dem Innenquerschnitt des Rohrstückes (9) ist, mit dem der Durchtrittskanal (12) mit dem anderen Sammelrohr (2) verbunden ist.

4. Wärmetauscher nach einem der Ansprüche 1 bis 3, **dadurch gekennzeichnet, dass** der Pfropfen (15) mit einem Endstück versehen ist, dessen Außendurchmesser dem Innendurchmesser des Sammelrohres (1) entspricht.

5. Wärmetauscher nach einem der Ansprüche 2 bis 4, **dadurch gekennzeichnet, dass** das Verschlussstück (13), das Rohrstück (9) und die Sammelrohre (1,2) aus Kunststoff, insbesondere aus Polypropylen, bestehen, und miteinander durch Wärmezufuhr verschweißt sind.

6. Wärmetauscher nach einem der Ansprüche 1 bis 5, **dadurch gekennzeichnet, dass** im Durchtrittskanal (12) ein Absperrorgan vorgesehen ist.

7. Wärmetauscher nach einem der Ansprüche 1 bis 6, **dadurch gekennzeichnet, dass** die Öffnung (11) über ein Rohrstück (9) und ein Knie (8) mit dem Rücklauf-Sammelrohr (2) verbunden ist.

8. Wärmetauscher nach einem der Ansprüche 1 bis 6, **dadurch gekennzeichnet, dass** eine Öffnung (11) des Verschlussstückes (13) über ein Rohrstück (9) und ein Knie (8) mit dem anderen Sammelrohr (2), vorzugsweise dem Rücklauf-Sammelrohr, verbunden ist.

9. Wärmetauscher nach einem der Ansprüche 1 bis 8, **dadurch gekennzeichnet, dass** das dem Verschlussstück (13) ferne Ende des Sammelrohres (1) einen Stutzen (15) trägt, der in die als Muffe (16) ausgebildete Öffnung (14) eines Verschlussstückes (13) einsetzbar ist.

## Claims

1. Heat exchanger through which a heat carrier medium flows, particularly for heating and/or cooling rooms, comprising a flow manifold (1), a return manifold (2) and a pipe register (3) connected to said manifolds, at least one of the manifolds (1) being closed at at least one end by an obturator fitting (13), wherein said obturator fitting (13) of this closed manifold (1) is provided with a through channel (12), one of the openings (11) of which being in communication with the other manifold (2), while the other opening (14) thereof may be connected to the manifold (1) of an adjacent heat exchanger, wherein the through channel (12) consists of two portions which form a, preferably right, angle with each other, **characterised in that** on said obturator fitting (13) a stopple (15) is provided, that is axially parallel to that portion of said through channel (12) which includes the opening (14) for connecting it to an adjacent heat exchanger, and which sealingly closes the end of the manifold (1) to be closed.

2. Heat exchanger according to claim 1, **characterised in that** the openings (11, 14) of the through channel (12) are formed as sleeves (10, 16), into which a piece of pipe (9) may be inserted.

3. Heat exchanger according to claim 2, **characterised in that** the inner cross-section of said through channel (12) equals the inner cross-section of said piece of pipe (9), through which said through channel (12) is in communication with said other manifold (2).

4. Heat exchanger according to any of claims 1 to 3, **characterised in that** said stopple (15) is provided with an end piece, the outer diameter of which corresponds to the inner diameter of the manifold (1).

5. Heat exchanger according to any of claims 2 to 4, **characterised in that** said obturator fitting (13), said piece of pipe (9) and said manifolds (1, 2) consist of plastic material, particularly of polypropylene, and are welded to each other by adduction of heat.

6. Heat exchanger according to any of claims 1 to 5, **characterised in that** a shut-off member is provided within said through channel (12).

7. Heat exchanger according to any of claims 1 to 6, **characterised in that** the opening (11) is in communication with said return manifold (2) through a piece of pipe (9) and an elbow (8).

8. Heat exchanger according to any of claims 1 to 6, **characterised in that** one opening (11) of said obturator fitting (13) is in communication with the other manifold (2), preferably with the return manifold, through a piece of pipe (9) and an elbow (8).

9. Heat exchanger according to any of claims 1 to 8, **characterised in that that** end of the manifold (1), which is remote from said obturator fitting (13), supports a connecting pipe (15), which may be inserted into the opening (14) of an obturator fitting (13) that is formed as a sleeve (16).

## Revendications

1. Echangeur de chaleur, à travers duquel un milieu caloporteur passe, particulièrement pour chauffer et/ou refroidir des locaux, comprenant un collecteur d'aller (1), un collecteur de retour (2) et un registre de tuyaux (3) relié à ces collecteurs, dans lequel au moins un des collecteurs (1) est fermée à au moins un bout par une pièce de fermeture (13), ladite pièce de fermeture (13) de ce collecteur fermé (1) étant pourvue d'un conduit de passage (12), dont une de ses ouvertures (11) est en communication avec l'autre collecteur (2), et dont l'autre ouverture (14) peut être reliée au collecteur (1) d'un échangeur de chaleur adjacent, ledit conduit de passage (12) consistant de deux morceaux, qui forment un angle, préférablement droit, l'un avec l'autre, **caractérisé en ce, qu'**un bouchon (15), axialement parallèle à ce morceau du conduit de passage (12), qui présente l'ouverture (14) à être reliée au échangeur de chaleur adjacent, ferme d'une façon étanche le bout du collecteur (1) à fermer.

2. Echangeur de chaleur selon la revendication 1, **caractérisé en ce que** les ouvertures (11, 14) du conduit de passage (12) sont formées comme des manchons (10, 16), dans lesquels on peut insérer une pièce de tuyau (9).

3. Echangeur de chaleur selon la revendication 2, **caractérisé en ce que** le profil intérieur en travers du conduit de passage (12) est égal au profil intérieur en travers de la pièce de tuyau (9), par laquelle le conduit de passage (12) est en communication avec l'autre collecteur (2).

4. Echangeur de chaleur selon une quelconque des revendications 1 à 3, **caractérisé en ce que** le bouchon (15) est pourvu d'une pièce terminale, dont le diamètre extérieur corresponde au diamètre intérieur du collecteur (1).

5. Echangeur de chaleur selon une quelconque des revendications 2 à 4, **caractérisé en ce que** la pièce de fermeture (13), la pièce de tuyau (9) et les collecteurs (1, 2) consistent d'une matière synthétique, particulièrement de polypropylène, et sont soudés l'un à l'autre par l'adduction de chaleur.

6. Echangeur de chaleur selon une quelconque des revendications 1 à 5, **caractérisé en ce qu'**un organe de fermeture est prévu dans le conduit de passage (12).

7. Echangeur de chaleur selon une quelconque des revendications 1 à 6, **caractérisé en ce que** l'ouverture (11) est en communication avec le collecteur de retour (2) par une pièce de tuyau (9) et un tube coudé (8).

8. Echangeur de chaleur selon une quelconque des revendications 1 à 6, **caractérisé en ce que** l'ouverture (11) de la pièce de fermeture (13) est en communication avec l'autre collecteur (2), préférablement le collecteur de retour, par une pièce de tuyau (9) et un tube coudé (8).

9. Echangeur de chaleur selon une quelconque des revendications 1 à 8, **caractérisé en ce que** ce bout du collecteur (1), qui est éloigné de la pièce de fermeture (13), porte une tubulure (15), qui peut être insérée dans l'ouverture (14) formée comme un manchon (16) d'une pièce de fermeture (13).
